# EUROPÄISCHE PATENTSCHRIFT

(11) **EP 3 535 120 B1**
(45) Veröffentlichungstag und Bekanntmachung des Hinweises auf die Patenterteilung: **07.07.2021**
(21) Anmeldenummer: 17792028.7
(22) Anmeldetag: 27.10.2017
(51) Int. Cl.: B32B 9/02, B32B 9/04

(54) **VERBUNDWERKSTOFFELEMENT, INSBESONDERE FÜR SPORTGERÄTE**
COMPOSITE MATERIAL, IN PARTICULAR FOR SPORTS EQUIPMENT
ÉLÉMENT EN MATÉRIAU COMPOSITE, NOTAMMENT POUR ENGINS DE SPORT

(30) Priorität: 03.11.2016 DE 102016120931
(43) Veröffentlichungstag der Anmeldung: 11.09.2019
(73) Patentinhaber: Bufo Technology UG, 30449 Hannover (DE)
(72) Erfinder: BRAUERS, Rouven Dirk, 30451 Hannover (DE)
(74) Vertreter: Patentanwälte Bauer Vorberg Kayser
(86) Internationale Anmeldenummer: PCT/EP2017/077569
(87) Internationale Veröffentlichungsnummer: WO 2018/083019

(56) Entgegenhaltungen:
- WO-A1-2014/200374
- DE-A1-102011 008 974
- DATABASE WPI Week 200430 Thomson Scientific, London, GB; AN 2004-320517 XP002776768, & JP 2004 058557 A (NIPPON CHEMIFELT KK) 26. Februar 2004 (2004-02-26)

## Beschreibung

Die vorliegende Erfindung betrifft ein Verbundwerkstoffelement, das insbesondere zur Herstellung von Sportgeräten genutzt werden kann.

Sportgeräte, insbesondere Surfbretter, Windsurfboards, Wakeboards, Kneeboards, Kiteboards, Skimboards oder Skateboards bestehen üblicherweise aus einem Grundkörper, der eine brettartige Form mit einer Ober- und einer Unterseite aufweist. Die beispielhaft genannten Sportgeräte unterliegen während der Benutzung des Sportgeräts erheblichen physikalischen Belastungen. Dazu gehören insbesondere Druck-/Zug-, Scher-, und Torsionsbelastungen. Sie müssen deshalb ausreichend widerstandsfähig sein, sollen aber trotzdem gute Dämpfungseigenschaften bei geringem Gewicht aufweisen. Diese sind für eine hohe Laufruhe und Kontrolle über das Sportgerät wesentlich.

Üblicherweise weisen die genannten Wassersportgeräte einen laminatummantelten Schaumstoffkern auf. Die Laminierungen können dabei beispielsweise aus einem Polyesterharz oder Epoxidharz und einem Fiberglasmaterial bestehen. Der Schaumkörper selbst ist beispielsweise aus Styropor oder Polyurethan gebildet. Als Außenlagen kommen häufig Faser-, Kunststoffverbunde (GFK oder CFK) zum Einsatz Sie verstärken je nach Ausrichtung die Torisons- oder Biegefestigkeiten.

Skateboards sind dagegen in einer besonders einfachen Ausführungsvariante aus einem Kunststoff gefertigt, vorzugsweise bestehen sie aber aus einem Holz aus der Gruppe der Furniersperrhölzer, und sind meistens siebenschichtig aufgebaut. Kanadisches oder baltisches Ahorn eignen sich besonders gut für die Herstellung. Auch bei Skateboards besteht die Schwierigkeit darin, ein optimales Maß zwischen einer hohen Widerstandsfähigkeit gegen Druck-, Scher- und Torsionskräfte und ausreichend hoher Dämpfung bereit zu stellen.

Kork wirkt dämpfend, weist jedoch eine sehr geringe Festigkeit auf. Aus der JP 2004 058557 A ist eine flexible Matte aus einem Kork-Polyamidfaser-Gemisch bekannt, die deodorisierend ist und gegen elektromagnetische Wellen abschirmt. Die WO 2014/200374 A1 beschreibt ganz allgemein die Verwendung von Kork in als Zwischenschicht. Die DE 10 2011 008974 A1 lehrt ein Verfahren zur Herstellung von Auslegeware, die auf ihrer Unterseite Poren aufweist und sich mittels eines Vakuums in den Poren an einem Boden ansaugen kann.

Die Aufgabe der Erfindung besteht darin, ein Verbundwerkstoffelement bereit zu stellen, welches sich zur Herstellung der oben genannten Sportgeräte eignet und gegenüber den Nachteilen des Standes der Technik verbesserte Eigenschaften aufweist. Das Verbundwerkstoffelement soll dabei kostengünstig und einfach herstellbar sein und insbesondere gute Dämpfungseigenschaften aufweisen. Weiterhin soll ein Verfahren zur Herstellung eines solchen Verbundwerkstoffelements bereitgestellt werden.

Die Erfindung wird durch ein Verbundwerkstoffelement gelöst, das mindestens eine verpresste Gemischlage aus Korkgranulat und Kurzfasern aufweist. Weiterhin wird die Aufgabe durch ein Verfahren mit den Merkmalen des unabhängigen Verfahrensanspruchs gelöst.

Im Folgenden wird für die erfindungsgemäße Lage aus einem Gemisch aus Korkgranulat und Kurzfasern der Begriff Gemischlage verwendet.

Die Gemischlage kann im Inneren zwischen zwei weiteren Laminatlagen, beispielsweise einer Oberlage und Unterlage angeordnet sein, denkbar ist aber auch die Anordnung der Lage unmittelbar als Ober- oder Unterseite. Ebenfalls denkbar ist die Anordnung von mehreren erfindungsgemäßen Gemischlagen innerhalb eines mehrschichtigen Verbundwerkstoffelements. Das erfindungsgemäße Verbundwerkstoffelement kann weiterhin Lagen aufweisen, die aus Geweben oder Stapelgelegen gebildet sind.

Grundsätzlich ist die Verwendung von Korkplatten als Sandwichkern aufgrund ihrer hochdämpfenden Eigenschaften bekannt. Für wettkampforientierte Belastungen bzw. entsprechend hoher Belastungen bei der Ausübung des Sports mit einem der genannten Sportgeräte reicht die Bruchfestigkeit von handelsüblichem Korkprodukten aber nicht aus. Kork weist naturgemäß nur eine geringe Druck- und Scherfestigkeit auf, weswegen sich Kork nicht für hochbelastete Sandwichstrukturen eignet. Dieser Nachteil wird erfindungsgemäß wirksam durch Hinzufügen von Kurzfasern ausgeglichen. Es hat sich insbesondere das Hinzufügen von Karbonfasern als besonders wirkungsvoll erwiesen, da diese die mechanische Belastbarkeit um ein Vielfaches erhöht, ohne dabei die vorteilhaften dämpfenden Eigenschaften negativ zu beeinflussen.

Die Eigenschaften der Gemischlage lassen sich vorteilhafterweise über die Volumenanteile (Menge) der Fasern und die Faserart beeinflussen. Die Länge der Fasern kann variieren, zum Beispiel von 0,05 mm bis etwa 6 mm, vorzugsweise 0,1 mm bis 0,3 mm. Das Korkgranulat kann erfindungsgemäß eine Dichte von etwa 50 kg/m³ -300 kg/m³ aufweisen, wobei sich etwa 90 kg/m³ -250 kg/m³ als besonders geeignet erwiesen haben. Auch über die Korkgranulatdichte lassen sich die Eigenschaften der Gemischlage bzw. des daraus hergestellten Verbundwerkstoffelements beeinflussen.

Es hat sich gezeigt, dass sich die Verwendung von Kurzfasern nicht nur die Scher- und Druckfestigkeit gegenüber herkömmlichen Korkplatten deutlich erhöht, sondern es wird auch ein Auftreten von sogenannten Zwischenfaserbrüchen innerhalb des Verbundwerkstoffelements deutlich reduziert. Dies ergibt sich daraus, dass Laminatgrenzflächen, die eine Korkfaserbeschichtung aufweisen, auftretende Schubspannungen deutlich besser abfangen können.

Die Gemischlage wird durch Pressen, Erhitzen und/oder Kleben erzeugt. Dabei kann das korkeigene Harz oder zugeführtes Kunstharz, beispielsweise Epoxidharz, Polyurethane, Venylester, Bioharze, Polyester, Acrylharze usw. verwendet werden. Gepresste oder verklebte Blöcke können in Lagen oder Platten verschiedener Stärken geschnitten werden und weisen eine dreidimensionale Faserverstärkung auf, die die deutlich verbesserten physikalischen Eigenschaften begründet. Alternativ können anstelle von brettartigen, flächigen Verbundwerkstoffelementen auch komplexe Formen unmittelbar aus der erzeugten Gemischlage geschnitten oder gefertigt werden. Denkbar ist auch die Verwendung beliebiger Formen, in die das flüssige Gemisch aus Korkgranulat und Kurzfasern zum Aushärten eingebracht wird.

Die Verwendung der erfindungsgemäßen Gemischlage selbst, also ohne eine weitere Lage aus einem anderen Material, ist grundsätzlich möglich und vorteilhaft, allerdings ist die Gemischlage selbst im Vergleich zu anderen Materialen weniger belastbar. Insofern ergibt sich ein besonders vorteilhaftes Verbundwerkstoffelement insbesondere durch Hinzufügen weiterer Lagen, insbesondere von Aussenlagen (klassischer Sandwich-Aufbau) aus anderen Materialien mit anderen gewünschten Eigenschaften.

Als Kurzfasermaterial kommen Baumwolle, Flachs, Basalt, Glas, Karbon, Synthesefasern (Vectran), Aramid, Kokosnuss, Hanf, Seide, Wolle, Bambus, Kozo, Gampi, Abaka, Kiefersulfat und auch Jute in Frage. Die Materialien können dabei als einziger Zuschlagsstoff, aber auch in Kombination miteinander mit dem Korkgranulat vermischt werden.

Es hat sich gezeigt, dass die Korngröße bzw. Korndurchmessergröße des Korkgranulats bei einer Verwendung als Kern- oder Zwischenschicht vorzugsweise 0,1 mm bis etwa 20 mm betragen sollte, um optimale physikalische Eigenschaften aufzuweisen. Wird die erfindungsgemäße Gemischlage als Ober- oder Unterschicht verwendet, hat sich eine Korngröße des Korkgranulats von etwa 0,1 mm bis etwa 2 mm als besonders günstig herausgestellt.

Das Korkgranulat liegt vorzugsweise in aufgeblähter, expandierter Form vor. Es wird mit den Kurzfasern derart vermischt, dass sich eine gleichmäßige Verteilung der beiden Materialen untereinander ergibt.

Vorzugsweise ist das Verbundwerkstoffelement aus biologisch abbaubarem Materialen gebildet. Beispielsweise wird dabei entweder ausschließlich das korkeigene Harz oder es werden als Zuschlagsstoffe lediglich Bioharze eingesetzt. Die meisten Bioharze mit guten technischen Eigenschaften haben zur Zeit bis zu 70% Bioanteil. Auch die Kurzfasern bestehen dann aus biologisch abbaubaren Materialien.

Ein wesentlicher Vorteil der erfindungsgemäßen Gemischlage aus Korkgranulat und Kurzfasern besteht auch darin, dass diese kein Wasser aufnimmt und resistent gegen Schimmel ist. Dadurch ist es besonders geeignet für die Ausbildung von Wassersportgeräten.

Das erfindungsgemäße Verbundwerkstoffelement kann beispielsweise mindestens eine zusätzliche Lage aus Glas aufweisen. In der einfachsten Variante ist nur eine Lage aus Glas und eine Lage aus dem Gemisch aus Korkgranulat und Kurzfasern vorgesehen. Die Gemischlage kann aber auch zwischen zwei Glaslagen angeordnet sein, beispielsweise bei Ski, Skate- oder Snowboards, vorteilhafterweise können sogar auch drei Glaslagen vorgesehen sein, die jeweils an Gemischlagen angrenzen. Mit anderen Worten sind jeweils außen Glaslagen vorgesehen, es folgen in Richtung des Inneren zwei Gemischlagen, die wiederum durch eine mittige Glaslage voneinander getrennt sind. Grundsätzlich können erfindungsgemäß sogar noch mehr Glaslagen und/oder Gemischlagen vorgesehen sein.

Als dritte Ausführungsvariante ist die Verwendung von Gemischlagen unmittelbar an einer der Außenseiten denkbar. Es sind auch zwei außen angeordnete Gemischlagen vorteilhaft, wobei im Inneren, also zwischen den beiden Gemischlagen ein anderes Material, beispielsweise eine Glaslage vorgesehen ist. Bei einem Surfbrett ist im Innern der schaumkern vorgesehen.

Schließlich ist auch die Verwendung von mindestens zwei Glaslagen im Inneren des erfindungsgemäßen Verbundwerkstoffelements denkbar.

In einer weiteren vorteilhaften Ausführungsvariante weist das Verbundwerkstoffelement im Inneren einen Schaumkern auf, an den sich beispielsweise eine Lage aus Karbon oder einem Glasfaserlaminat anschließt. Außen kann dann wiederum eine erfindungsgemäße Gemischlage angeordnet sein. Die Gemischlage kann aber auch zwischen dem Schaumkern und der Lage aus Karbon oder einem Glasfaserlaminat vorgesehen sein.

Abgesehen von Glas eignen sich auch verschiedene andere geeignete Materialen zur Kombination mit der erfindungsgemäßen Gemischlage geeignet. Als Laminatmaterial kommen Baumwolle, Flachs, Basalt, Glas, Karbon, Synthesefasern (Vectran), Aramid, Kokosnuss, Hanf, Seide, Wolle, Bambus, Kozo, Gampi, Abaka, Kiefersulfat und auch Jute in Frage. Die Materialien können dabei als einziger Zuschlagsstoff, aber auch in Kombination miteinander mit dem Korkgranulat vermischt werden.

Das Verbundwerkstoffelement eignet sich nicht nur zu Fertigung von Sportgeräten, insbesondere Wassersportgeräten und Skateboards, sondern kann auch in anderen Bereichen eingesetzt werden, in denen leichte, widerstandsfähige und trotzdem schwingungsdämpfende Materialien benötigt werden. Es bieten sich beispielsweise hierzu die Verwendung im Flugzeugbau, Schiffbau oder allgemein im Fahrzeugbau an. Geeignet sind erfindungsgemäße Verbundwerkstoffelemente aber auch für Bauteile von Windkraftanlagen, z.B. Windkraftflügel, Unterwasserturbinenflügel oder auch allgemein als Bauteile von Gebäuden, wie beispielsweise Vordächer oder Wintergartengerüste.

Erfindungsgemäß kann das Verkleben der beiden Materialen miteinander ausschließlich auf Basis des ohnehin im Kork vorhandenen Korkharzes erfolgen. Alternativ ist es erfindungsgemäß möglich, einen Klebstoff hinzuzufügen. Hierbei kann es sich insbesondere um einen biologisch abbaubaren Klebstoff, wie beispielsweise Bioharz oder ähnliche geeignete Klebstoffe handeln.

Ein erfindungsgemäßes Verfahren zu Herstellung eines Verbundwerkstoffelements weist die folgenden Verfahrensschritte auf:
- Aufmahlen von Kork zu einem Korkgranulat,
- Herstellen von Kurzfasern aus einem zweiten Material,
- Vermischen, unter Druck verpressen und Verkleben des Korkgranulats mit den Kurzfasern,
- Aushärten der Mischung aus Korkgranulat und Kurzfasern

In einem zusätzlichen Verfahrensschritt oder auch gleichzeitig mit dem Verkleben der beiden Materialen können diese erfindungsgemäß unter Druck verpresst werden. Insbesondere eignet sich ein Pressen unter Vakuum, oder die Verwendung eines Autoklaven (einer Überdruckkammer). Die Herstellung der einzelnen Schichten zur Ausbildung des eigentlichen Verbundwerkstoffelements oder des letztendlichen Produkts kann von Hand oder durch geeignete Prozesse durchgeführt werden.

Es hat sich als besonders vorteilhaft erwiesen, wenn beispielsweise bei Sportgeräten mit einem Schaumkern, wie Surfboards, außen die Gemischlage mit Kurzfasern vorgesehen ist. Dies führt zu einer maximalen Widerstandsfähigkeit des Sportgeräts. Trotzdem kann es auch sinnvoll sein, außen eine Lage aus Kunstharz und Korkpartikeln vorzusehen, die keine Kurzfasern beinhaltet. In einer besonders vorteilhaften Ausführungsvariante ist die außen angeordnete Lage, also die Gemischlage bzw. die Lage aus Kunstharz und Korkpartikeln schwarz eingefärbt. Dies führt zu einem optisch ansprechender Eindruck nach der Endbearbeitung, vorzugsweise nach einem Abschleifen des Sportgeräts. Hinzu kommt, dass oftmals die darunterliegende Lage ebenfalls schwarz ist, wenn sie bei beispielsweise aus Karbon gefertigt ist.

Die Erfindung wird anhand der nachfolgenden Figuren erläutert, wobei die Figuren lediglich beispielhaft zu verstehen sind und die Erfindung nicht auf diese beschränken sollen. Es zeigen:
- Figur 1:: Eine Prinzipdarstellung eines erfindungsgemäßen Verbundwerkstoffelements im Querschnitt,
- Figur 2:: Eine zweite Ausführungsvariante eines erfindungsgemäßen Verbundwerkstoffelements mit einer außen angeordneten Laminatlage,
- Figur 3:: Eine dritte Ausführungsvariante eines erfindungsgemäßen Verbundwerkstoffelements als Kernlage mit zwei Gemischlagen,
- Figur 4:: Eine vierte Ausführungsvariante eines erfindungsgemäßen Verbundwerkstoffelements mit drei Gemischlagen,
- Figur 5:: Eine weitere Ausführungsvariante eines erfindungsgemäßen Verbundwerkstoffelements mit einer zusätzlichen Oberlage und einer zusätzlichen Unterlage,
- Figur 6:: Eine weitere Ausführungsvariante eines erfindungsgemäßen Verbundwerkstoffelements mit zwei Gemischlagen und drei zusätzlichen Lagen,
- Figur 7:: Eine vereinfachte Prinzipdarstellung Surfboards im Querschnitt gebildet aus einem erfindungsgemäßen Verbundwerkstoffelement.

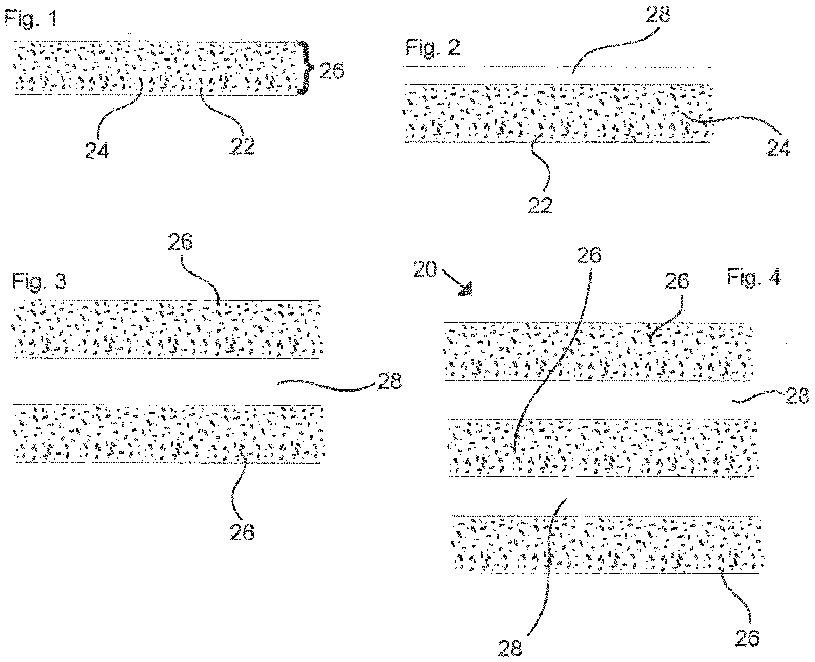

Figur 1 zeigt ein erfindungsgemäßes Verbundwerkstoffelements 20 im Querschnitt, gebildet aus Korkgranulat 22 und Kurzfasern 24. Das Korkgranulat 22 und die Kurzfasern 24 bilden gemeinsam einen Gemischlage 26 aus.

Bei dem in Figur 2 gezeigten Ausführungsbeispiel ist auf der Gemischlage 26 außen eine Laminatlage 28 angeordnet.

Figur 3 zeigt eine Ausführungsvariante, bei der sich Gemischlagen 26 auf Außenseiten eines Verbundwerkstoffelements 20 befinden, sie bilden eine Oberlage und eine Unterlage aus. Zwischen den beiden Gemischlagen 26 ist die Laminatlage 28 angeordnet, die aus einem anderen Material, mit anderen physikalischen Eigenschaften gebildet ist.

Figur 4 zeigt eine Ausführungsvariante bestehend aus insgesamt fünf Lagen, wobei die Gemischlagen 26 wiederum außen angeordnet sind und sich in Richtung des Innern des Verbundwerkstoffelements 26 an diese jeweils eine Laminatlage 28 anschließt. Im Inneren des geziegten Verbundwerkstoffelements 20 befindet sich eine dritte Gemischlage 26.

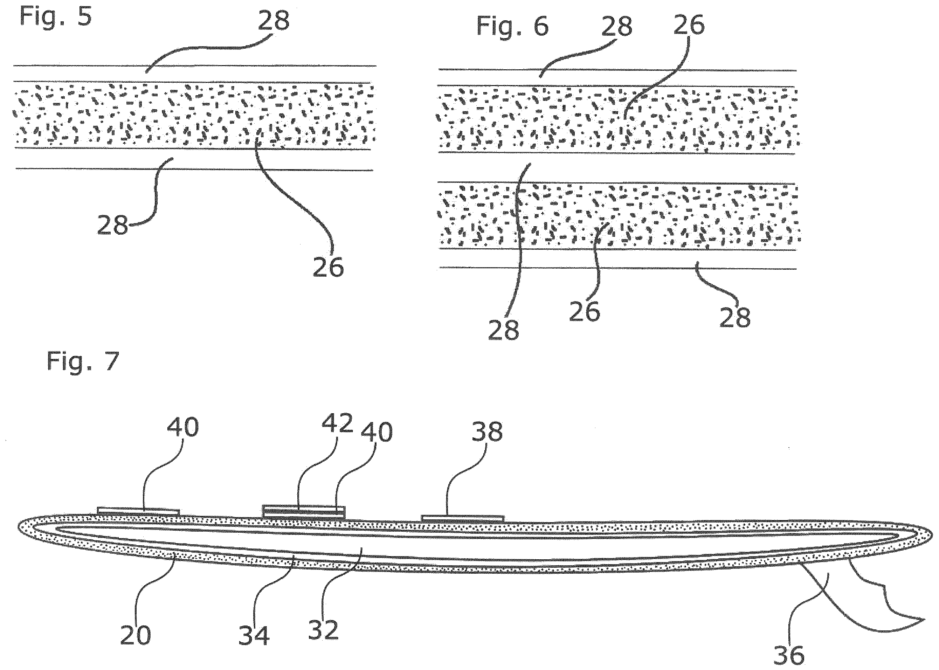

Die Figuren 5 und 6 zeigen Ausführungsvarianten des erfindungsgemäßen Verbundwerkstoffelements 20, bei denen auf der Außenseite jeweils Laminatlagen 28 ausgebildet sind. Bei der Ausführungsvariante gemäß Figur 5 ist im Inneren nur eine Gemischlage 26, bei der Ausführungsvariante gemäß Figur 6 sind zwei Gemischlagen 26 vorgesehen. Das Verbundwerkstoffelement 20 gemäß Figur 6 weist im Inneren eine dritte Laminatlage 28 auf.

Figur 7 zeigt in einer beispielhaften Prinzipskizze einen Querschnitt eines Surfboards 30. Dieses weist einen Schaumkern 32 auf, der von einer Karbonschicht 34 umgeben ist. Es schließt sich außen umlaufend eine erfindungsgemäße Gemischlage 26 an. An der Außenseite sind weiterhin eine Finne 36 sowie ein Karbonelement 38 ein Glaselement 40 sowie ein Korkgranulatelement 42 erkennbar.

Die Ausführungsbeispiele gemäß der Figuren 2 bis 6 sind insbesondere als Laminat-Ummantelung für einen Schaumkern, z.B. ein Surfboard 30 geeignet.

Die Erfindung ist nicht auf die gezeigten Verbundwerkstoffelemente beschränkt, sonder umfasst auch weitere erfindungsgemäße Ausführungsvarianten. Der Schichtaufbau kann sich beispielsweise in Abhängigkeit der Anforderungen an das Verbundwerkstoffelement 20 von den gezeigten Ausführungsvarianten unterscheiden.

Die erfindungsgemäße Gemischlage 26 kann erfindungsgemäß grundsätzlich auch als Halbzeug verwendet werden. Insbesondere eignet es sich beispielsweise für die Herstellung von verschiedensten Composite-Bauteilen.

Es hat sich gezeigt, dass sich die erfindungsgemäße Gemischlage 26 beispielsweise auch als Beschichtung für Fußböden eignet. Dies ist deshalb vorteilhaft, weil die Gemischlage 26 sowohl eine ausgesprochen hohe Schalldämpfung als auch eine thermische Isolierung bewirkt. Die Gemischlage 26 kann in Form fester Elemente, zum Beispiel als Fliesen auf dem Boden verlegt werden, in einer besonders vorteilhaften Ausführungsvariante ist es aber auch möglich, die Gemischlage 26 in noch flüssigem Zustand auf den Boden aufzubringen. Sie kann gegossen werden und härtet dann aus. Somit ergibt sich ein nahtfreier, ausgesprochen ebener Fußbodenbelag.

## Patentansprüche

1. Verbundwerkstoffelement (20), insbesondere zur Herstellung von Sportgeräten, **dadurch gekennzeichnet, dass** es mindestens eine verpresste Gemischlage (26) aus Korkgranulat (22) und Kurzfasern (24) aufweist.

2. Verbundwerkstoffelement (20) nach Anspruch 1, **dadurch gekennzeichnet, dass** die Kurzfasern (24) aus mindestens einem Material aus der Gruppe Karbon, Baumwolle, Flachs, Basalt, Glas, Synthesefasern, Aramid, Kokosnuss, Hanf, Seide, Wolle, Bambus, Kozo, Gampi, Abaka, Kiefersulfat oder Jute bestehen.

3. Verbundwerkstoffelement (20) nach Anspruch 1 oder Anspruch 2, **dadurch gekennzeichnet, dass** die Kurzfasern (24) eine Länge von 0,05 mm bis etwa 6 mm, vorzugsweise 0,1 mm bis 0,3 mm aufweisen.

4. Verbundwerkstoffelement (20) nach einem der Ansprüche 1 bis 3, **dadurch gekennzeichnet, dass** das Korkgranulat eine Dichte von etwa 50 kg/m³ - 300 kg/m³, insbesondere 90 kg/m³ -250 kg/m³ aufweist.

5. Verbundwerkstoffelement (20) nach einem der Ansprüche 1 bis 4, **dadurch gekennzeichnet, dass** die Gemischlage (26) weiterhin ein Kunstharz und/oder Bioharz aufweist.

6. Verbundwerkstoffelement (20) nach Anspruch 5, **dadurch gekennzeichnet, dass** das Kunstharz ein Kunstharz aus der Gruppe Epoxidharz, Polyurethan, Venylester, Acrylharz, Phenolharz, Bioharz oder Polyester ist.

7. Verbundwerkstoffelement (20) nach einem der Ansprüche 1 bis 6, **dadurch gekennzeichnet, dass** es mindestens eine weitere Laminatlage (28) aus einem anderen Material aufweist.

8. Verbundwerkstoffelement (20) nach Anspruch 7, **dadurch gekennzeichnet, dass** die Gemischlage (26) bezogen auf einen im Querschnitt gesehen in der Mitte als Kernlage angeordent ist.

9. Verbundwerkstoffelement (20) nach Anspruch 7, **dadurch gekennzeichnet, dass** die Gemischlage (26) außen angeordent ist.

10. Verbundwerkstoffelement (20) nach Anspruch 9, **dadurch gekennzeichnet, dass** zwei jeweils außen angeordnete Gemischlagen (26) vorgesehen sind und im Inneren zwischen den beiden Gemischlagen (26) die Laminatlage (28) angeordnet ist.

11. Verbundwerkstoffelement (20) nach einem der Ansprüche 7 bis 10, **dadurch gekennzeichnet, dass** die Laminatlage (28) aus mindestens einem Material aus der Gruppe Glas, Baumwolle, Flachs, Basalt, Glas, Karbon, Synthesefasern (Vectran), Hybridfasern, Aramid, Kokosnuss, Hanf, Seide, Wolle, Bambus, Kozo, Gampi, Abaka, Kiefersulfat oder Jute gebildet ist.

12. Verbundwerkstoffelement (20) nach einem der Ansprüche 1 bis 11, **dadurch gekennzeichnet, dass** es überwiegend biologisch abbaubare Materialen aufweist.

13. Verbundwerkstoffelement (20) nach einem der Ansprüche 1 bis 12, **dadurch gekennzeichnet, dass** außen eine Lage bestehend aus Korkgranulat und Kunstharz angeordnet ist.

14. Verbundwerkstoffelement (20) nach Anspruch 13, **dadurch gekennzeichnet, dass** die äußere Lage schwarz eingefärbt ist.

15. Verwendung eines Verbundwerkstoffelements (20) nach einem der Ansprüche 1 bis 14 in einem Wassersportgerät, insbesondere einem Windsurfboard, Surfboard, Kiteboard, Skateboard, Hoverboard, in einem Flugzeug, Straßenfahrzeug, Wasserfahrzeug, Gebäude oder in einer Windkraftanlage.

16. Verfahren zu Herstellung eines Verbundwerkstoffelements (20) mit den Verfahrensschritten:
- Aufmahlen von Kork zu einem Korkgranulat (22),
- Herstellen von Kurzfasern (24) aus einem zweiten Material,
- Vermischen, unter Druck verpressen und Verkleben des Korkgranulats (22) mit den Kurzfasern (24),
- Aushärten der Mischung aus Korkgranulat (22) und Kurzfasern (24).

17. Verfahren nach Anspruch 16, **gekennzeichnet durch** Zufügen eines Kunstharzes

18. Verfahren nach Anspruch 16, **gekennzeichnet durch** ein Verpressen unter Vacuum.

## Claims

1. A composite material element (20), particularly for the manufacture of sports equipment, **characterized in that** it comprises at least one compressed mixed layer (26) of cork granules (22) and short fibers (24).

2. The composite material element (20) according to claim 1, **characterized in that** the short fibers (24) consist of at least one material of the group comprising carbon, cotton, flax, basalt, glass, synthetic fibers, aramide, coconut, hemp, silk, wool, bamboo, kozo, gampi, abaca, pine kraft and jute.

3. The composite material element (20) according to claim 1 or claim 2, **characterized in that** the short fibers (24) have a length between 0.05 mm and about 6 mm, preferably between 0.1 mm and 0.3 mm.

4. The composite material element (20) according to one of claims 1 to 3, **characterized in that** the cork granules have a density of about 50 kg/m³ - 300 kg/m³, particularly 90 kg/m³ - 250 kg/m³.

5. The composite material element (20) according to one of claims 1 to 4, **characterized in that** the mixed layer (26) furthermore comprises a synthetic resin and/or bioresin.

6. The composite material element (20) according to claim 5, **characterized in that** the synthetic resin is a synthetic resin of the group comprising epoxy resin, polyurethane, vinyl ester, acrylic resin, phenol resin, bioresin and polyester.

7. The composite material element (20) according to one of claims 1 to 6, **characterized in that** it comprises at least one additional laminate layer (28) of a different material.

8. The composite material element (20) according to claim 7, **characterized in that** the mixed layer (26) is arranged centrally in the form of a core layer referred to a cross section.

9. The composite material element (20) according to claim 7, **characterized in that** the mixed layer (26) is arranged on the outside.

10. The composite material element (20) according to claim 9, **characterized in that** two mixed layers (26) are provided and respectively arranged on the outside, and **in that** the laminate layer (28) is arranged in the interior between the two mixed layers (26).

11. The composite material element (20) according to one of claims 7 to 10, **characterized in that** the laminate layer (28) is made of at least one material of the group comprising glass, cotton, flax, basalt, glass, carbon, synthetic fibers (Vectran), hybrid fibers, aramide, coconut, hemp, silk, wool, bamboo, kozo, gampi, abaca, pine kraft and jute.

12. The composite material element (20) according to one of claims 1 to 11, **characterized in that** it predominantly comprises biodegradable materials.

13. The composite material element (20) according to one of claims 1 to 12, **characterized in that** a layer consisting of cork granules and synthetic resin is arranged on the outside.

14. The composite material element (20) according to claim 13, **characterized in that** the outer layer is colored black.

15. The use of a composite material element (20) according to one of claims 1 to 14 in water sports equipment, particularly a sailboard, surfboard, kiteboard, skateboard or hoverboard, in an aircraft, road vehicle, watercraft or building or in a wind power plant.

16. A method for manufacturing a composite material element (20), comprising the following steps:
- grinding cork into cork granules (22),
- producing short fibers (24) of a second material,
- mixing, compressing under pressure and bonding the cork granules (22) with the short fibers (24),
- curing the mixture of cork granules (22) and short fibers (24).

17. The method according to claim 16, **characterized by** the addition of a synthetic resin.

18. The method according to claim 16, **characterized by** a compression under vacuum.

## Revendications

1. Élément en matière composite (20), destiné notamment à fabriquer des équipements de sport, **caractérisé en ce qu'**il comporte au moins une couche de mélange (26) compressée en liège granulé (22) et en fibres courtes (24).

2. Élément en matière composite (20) selon la revendication 1, **caractérisé en ce que** les fibres courtes (24) sont constituées d'au moins un matériau du groupe comprenant le carbone, le coton, le lin, le basalte, le verre, les fibres synthétiques, l'aramide, la noix de coco, le chanvre, la soie, la laine, le bambou, l'écorce de mûrier, le ganpi, l'abaca, le sulfate de pin ou la jute.

3. Élément en matière composite (20) selon la revendication 1 ou la revendication 2, **caractérisé en ce que** les fibres courtes (24) ont une longueur de 0,05 mm à environ 6 mm, de préférence de 0,1 mm à 0,3 mm.

4. Élément en matière composite (20) selon l'une quelconque des revendications 1 à 3, **caractérisé en ce que** le liège granulé a une densité d'environ 50 kg/ m₃ à 300 kg/ m³, notamment de 90 kg/ m³ à 250 kg/m³.

5. Élément en matière composite (20) selon l'une quelconque des revendications 1 à 4, **caractérisé en ce que** la couche de mélange (26) comporte en outre une résine synthétique et/ou une bio-résine.

6. Élément en matière composite (20) selon la revendication 5, **caractérisé en ce que** la résine synthétique est une résine synthétique du groupe comprenant la résine époxy, le polyuréthane, le vinylester, la résine acrylique, la résine phénolique, la bio-résine ou le polyester.

7. Élément en matière composite (20) selon l'une quelconque des revendications 1 à 6, **caractérisé en ce qu'**il comporte au moins une couche laminée (28) supplémentaire en un autre matériau.

8. Élément en matière composite (20) selon la revendication 7, **caractérisé en ce que** la couche de mélange (26) est placée au centre, vu dans la section transversale sous la forme d'une couche de noyau.

9. Élément en matière composite (20) selon la revendication 7, **caractérisé en ce que** la couche de mélange (26) est placée à l'extérieur.

10. Élément en matière composite (20) selon la revendication 9, **caractérisé en ce que** deux couches de mélange (26) placées à l'extérieur sont prévues et **en ce que** la couche de laminé (28) est placée à l'intérieur entre les deux couches de mélange (26).

11. Élément en matière composite (20) selon l'une quelconque des revendications 7 à 10, **caractérisé en ce que** la couche de laminé (28) est constituée en au moins un matériau du groupe comprenant le verre, le coton, le lin, le basalte, le carbone, les fibres se synthèse (Vectran), les fibres hybrides, l'aramide, la noix de coco, le chanvre, la soie, la laine, le bambou, l'écorce de mûrier, le ganpi, l'abaca, le sulfate de pin ou la jute.

12. Élément en matière composite (20) selon l'une quelconque des revendications 1 à 11, **caractérisé en ce qu'**il comporte majoritairement des matériaux biodégradables.

13. Élément en matière composite (20) selon l'une quelconque des revendications 1 à 12, **caractérisé en ce qu'**à l'extérieur est placée une couche constituée de liège granulé et de résine synthétique.

14. Élément en matière composite (20) selon la revendication 13, **caractérisé en ce que** la couche extérieure est teintée en noir.

15. Utilisation d'un élément en matière composite (20) selon l'une quelconque des revendications 1 à 14 dans un équipement de sport nautique, notamment dans une planche à voile, dans une planche de surf, dans un kiteboard, dans un skateboard, dans un hoverboard, dans un avion, dans un véhicule routier, dans un véhicule nautique, dans un bâtiment ou dans une éolienne.

16. Procédé, destiné à fabriquer un élément en matière composite (20), comportant les étapes de procédé consistant à :
- broyer du liège pour obtenir un liège granulé (22),
- fabriquer des fibres courtes (24) à partir d'un deuxième matériau,
- mélanger, compresser sous pression et coller du liège granulé (22) avec les fibres courtes (24),
- faire durcir le mélange de liège granulé (22) et de fibres courtes (24).

17. Procédé selon la revendication 16, **caractérisé par** l'ajout d'une résine synthétique.

18. Procédé selon la revendication 16, **caractérisé par** une compression sous vide.
